# EUROPEAN PATENT SPECIFICATION

(11) **EP 0 462 722 B1**
(45) Date of publication and mention of the grant of the patent: **25.09.1996**
(21) Application number: 91305049.8
(22) Date of filing: 04.06.1991
(51) Int. Cl.: C08L 23/10, C08K 5/02

(54) **Flame retardant composition**
Feuerhemmende Zusammensetzung
Composition ignifugée

(30) Priority: 04.06.1990 US 532893
(43) Date of publication of application: 27.12.1991
(73) Proprietor: ILLINOIS TOOL WORKS INC., Chicago, Illinois 60631-2887 (US)
(72) Inventor: Lo, Ying-Cheng, Mundelein, Illinois 60060 (US); Khattab,Ghazi M.A., Glenview, Illinois 60025 (US)
(74) Representative: Perry, Robert Edward

(56) References cited:
- US-A- 3 640 946
- WORLD PATENTS INDEX LATEST Week 8639, Derwent Publications Ltd., London, GB; AN 86-255430 & JP-A- 61 183 337
- WORLD PATENTS INDEX LATEST Week 8127, Derwent Publications Ltd., London, GB; AN 81-48500D & JP-A- 56 055 342

## Description

This application is directed to a flame retardant composition. More particularly this application is directed to a flame retardant sheet material which includes polypropylene and copolymers of polypropylene which readily fabricate in bending, scoring and folding operations.

Sheet materials are used as flame retardants or barriers. Of particular interest is to fabricate these sheets as a structure or part of a structure for electrical cabinets containing electrical or electronic devices. These sheets should not only be a flame retardant, but also should be an electrical insulator. Moreover, these sheets also should have the ability to form a flame retardant rigid, planar or curvilinear structure without association with any other structural material. As a result it is important that these flame retardant sheets readily fold, score and bend into fabricated structures by themselves or in association with other materials such as a metal electrical cabinet where the sheets form a flame retardant electrical insulator.

Heretofore polypropylene with a flame retardant has been extruded into flame retardant sheets which have been fabricated into electrical cabinet liners or structures used to contain electrical or electronic devices. These sheets, however, have not provided for ease of fabrication, have not provided tear resistance and have shown a proclivity to crack when scored and folded during fabrication.

It is an object of this invention to provide an extrudable flame retardant composition.

It is another object of this invention to provide a flame retardant composition which may be readily fabricated into flame retardant rigid structures.

According to one aspect of the present invention, an extrudable flame retardant composition comprises a blend consisting of
33 to 64% by weight of a propylene-ethylene copolymer having a tensile stress at yield of at least 13800 kPa, a density of 0.89 to 0.91 g/cc, and a drop weight impact, at -29°C, of at least 13.5 J;
25 to 45% by weight of a polypropylene having a tensile stress at yield of at least 20,700 kPa and a density of 0.89 to 0.91 g/cc, the ratio of polypropylene to copolymer being 0.5:1 to 0.8:1; and
14 to 23% by weight of a flame retardant.

Such a composition, on extrusion, provides a sheet material which resists cracking and tearing during fabrication. A sheet according to the invention is extruded from a composition of the invention and is 0.2 to 2.5 mm (8 to 100 mil) in thickness. When sheets of the invention are scored or grooved to more than 10%, but less than 90%, of their thickness, cracking does not occur in the sheets when the sheets are folded along the line of the score. Moreover, such sheets may be folded along the line of score at a speed of 200 to 2,000 degrees/second, without cracking. Hence the composition of the invention provides a flame-retardant sheet which may be readily fabricated without cracking. This avoids a high or unacceptable rejection of fabricated product which does not meet manufacturing quality assurance standards.

Moreover, the composition of the invention readily extrudes without producing exuded flame retardant heat stabilisers or other additives to foul extrusion equipment, including casting rolls, used when the composition is extruded into sheets. Elimination of these exuded materials is an important feature of the invention, because it obviates clean-up and sticking of the extruded sheets to the casting rolls. The composition of the invention also produces an improved flame retardancy, of about VTMO (under Test UL-94) down to a sheet thickness of about 0.25 mm (0.010"), where current commercial flame-retardant sheets produce a VTMO flame retardancy only with thicker sheets, of about 0.45 mm (0.018").

Preferably, the novel blend includes 35 to 55% by weight of the copolymer. More preferably, the blend consists of 29 to 34% by weight of the polypropylene, 45 to 52% by weight of the copolymer, and 18 to 19% by weight of the flame retardant. It is then preferred that the ratio of polypropylene to copolymer is 0.6 to 0.7.

The copolymer has a tensile stress at yield of at least 13800 kPa (2000 psi) and preferably about 27600 kPa (4000 psi) (under ASTM Test D638), a density of 0.89 to 0.91 g/cc, preferably 0.897 g/cc (under ASTM Test D792A-2), and a drop weight impact at -29°C (-20°F) of at least 13.5 J (10 foot-pounds), preferably 23 to 27 J (17 to 20 foot-pounds). The copolymer preferably has a notched Izod impact strength at 23°C (73°F) of at least 0.5 J/mm (10 foot-pounds/inch) (under ASTM Test D256A), more preferably 0.5 to 0.8 J/mm (10 to 15 foot/pounds/inch); an elongation at yield of less than 100% (under ASTM Test D638); and a melt-flow rate of 0.1 to 2.0 dg/min, more preferably about 0.5 dg/min (under ASTM Test D1238). Copolymers of propylene and ethylene commercially available as Pro-Fax 7723 and 7823 from Himont U.S.A. are suitable for use in the invention.

The polypropylene used in the invention may be iso- or syndio-tactic. It has a tensile stress at yield of at least 20700 kPa (3,000 psi) (51 mm (2")/minute; under ASTM Test D-638-68), preferably 27600 to 34500 kPa (4,000 to 5,000 psi); and a density of 0.890 to 0.910 g/cc (under ASTM Test D792), preferably about 0.90 g/cc. The polypropylene preferably has a melt-flow rate of 0.1 to 2.0 dg/min (under ASTM Test D1238(L)), more preferably about 1.2 dg/min; an elongation at yield of 15 to 500% (51 mm (2")/minute; under ASTM Test D-638-68); and a notched Izod impact strength of 0.04 to 0.11 J/mm (0.8 to 2.0 foot-pounds/inch) at 23°C (73°F) (under ASTM Test D-256), more preferably about 0.06 J/mm (1.2 foot-pounds/inch). Polypropylene suitable for use in the invention is commercially available as Escorene PP-5052 from Exxon Chemicals.

Most preferably, the polypropylene has a tensile stress at yield of 27600 to 34500 kPa, and the copolymer has a tensile stress at yield of at least 27600 kPa and a drop weight impact of 23 to 27 J.

The flame retardant may be a mixture of materials and may include a synergist. Hence, the weight of the flame retardant described herein is the combined weight of the flame retardant such as a halogenated organic flame retardant plus the synergist. The synergist may be a metal oxide such as antimony oxide or a salt thereof such as sodium antimonate.

The flame retardant includes a halogenated organic flame retardant such as bis(2,3-dibromopropyl ether) of tetrabromobisphenol A, tetrabromobisphenol A-bis(2-hydroxyethyl ether), tetrabromobisphenol A-bis (allyl ether), hexabromocyclodecane, decabromodiphenyl oxide, octabromodiphenyl oxide, pentabromodiphenyl oxide, 2,4,6-tribromophenol, poly-dibromophenylene oxide, bis(tribromophenoxy) ethane, tetrabromophthalic anhydride or tetrabromophthalate diol. The halogenated flame retardant may be combined with a synergist to enhance the effectiveness of the halogenated organic flame retardant. The synergist may be a metal oxide such as antimony oxide or salt such as sodium antimonate. The ratio of halogenated organic flame retardant to synergist is in the range of from 2:1 3:1.

Bis(2,3-dibromopropyl ether) of tetrabromobisphenol A is an important aspect of the invention and has the formula 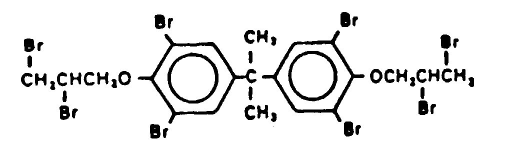 Lower alkyl groups (C₁ to C₄ chain or branched) may be substituted for one or more of the methyl groups in the bis(2,3-dibromopropyl ether) of tetrabromobisphenol A to provide a suitable flame retardant in the invention.

Using a combination of bis(2,3-dibromopropyl ether) of tetrabromobisphenol A and antimony oxide is an important aspect of the invention. In this aspect, the bis(2,3-dibromopropyl ether) of tetrabromobisphenol A and antimony oxide are in a ratio in a range of from 2:1 to 3:1 ether to antimony oxide, with the combination of the dibromopropyl ether and antimony oxide comprising from 14 to 23 % by weight of the composition.

The extrudable flame retardant composition which is a blend also advantageously includes from 0.5 to 1.2 % by weight, based upon the weight of the blend, of a halogen heat stabilizer such as magnesium aluminum hydroxy carbonate. The halogen heat stabilizer is an acid acceptor which associates with a halogen acid formed when halogen is released into a moist atmosphere from the halogenated flame retardant with the exposure of the halogenated flame retardant to elevated extrusion temperatures in the range of 193 to 249°C (380 to 480°F) and service temperatures of about 98°C (200°F) at which extruded product will be used. The association of the acid with the stabilizer reduces exposure of the polypropylene and copolymer to the acid and degradation therefrom. The extrudable flame retardant composition blend further advantageously includes from 1.0 to 2.0 % by weight, based upon the weight of the blend, of an antioxidant which generally is a sterically hindered phenol such as
2,2-bis[[3-[3,5-bis(1,1-Dimethylethyl)-4-hydroxyphenyl]-l-oxopropoxy]methyl]-1,3-propanediyl 3,5-bis(1,1-dimethylethyl)-4-hydroxybenzenepropanoate.
The antioxidant reduces the tendency of the propylene and copolymer to oxidize during extrusion at elevated temperatures.

A two-part extrudable flame retardant composition is another important aspect of the invention. In this aspect of the invention, the extrudable composition is made from two parts. A first part or Part A consists essentially of polypropylene and constitutes from 28 to 35 % by weight of the total extrudable composition. The second part or Part B is 65 to 72 % by weight of the total extrudable composition. The second part includes from 65 to 75 % by weight, based upon the weight of the second part, of the copolymer of propylene and ethylene and from 22 to 32 % by weight, based upon the weight of the second part, of flame retardant. The second part also may include a halogen heat stabilizer and antioxidant in an amount effective for providing a blend of the first and second parts with from 0.5 to 1.2 % by weight percent heat stabilizer and from 1.0 to 2.0% by weight antioxidant.

The second part or Part B may be used as is as a blend or it may be melt processed into pellets by a plasticating extruder at a temperature in the range of from 193 to 249°C (380 to 480°F). After mixing Parts A and B, the composition is extruded at 193 to 249°C (380 to 480°F) into sheets. Thereafter the extruded sheets may be fabricated by scoring and/or perforating, folding along the scoring lines and bending. The composition of the invention may be extruded into sheets having a thickness of 0.2 to 2.5 mm (8 to 100 mil) which may be scored and folded into liners for electrical boxes which liners serve not only as insulators, but also contain sparks and resulting electrical fires. These liners may be adhesively or riveted onto the inside metal walls of the electrical cabinet or conduit.

The sheets extruded from the composition of the invention having a thickness of from 0.2 to 2.5 mm (8 to 100 mil) and which have been scored or grooved to a depth of from 10 to 90 percent of the sheet thickness will permit at least 10 foldings at 25 to 180°C along the score line, without cracking. This permits a consistently higher quality fabricated product heretofore permitted in the prior art.

The following example sets forth an example of the composition of the invention as well as an example of manufacturing extruded sheets from the composition.

### EXAMPLE I

A mixture comprising two components is extruded and fabricated. The first component or Part A is propylene homopolymer (PP-5052 from Exxon Chemicals) and comprises 31.3 weight percent of the total weight of the two components. The second component or Part B is 68.7 weight percent of the total weight of the two components. The second component comprises 70.83 weight percent, based upon the weight of the second component, of a copolymer of propylene and ethylene (Himont 7823 available from Himont U.S.A.,); 17.89 weight percent based upon the weight of the second component, bis(2,3-dibromopropyl ether) of tetrabromobisphenol A (commercially available from Great Lakes Chemical Corporation as PE-68); 8.95 weight percent antimony oxide; 0.87 weight percent halogen heat stabilizer which is magnesium aluminum hydroxy carbonate and which has the formula Mg 4.5 Al₂(OH)₁₃·3.5H₂O (commercially available as DHT 4A-2 from Mitsui & Co. (U.S.A.), Inc. or Kyowa Chem. Ind.); and 1.46 weight percent 2,2-bis[[3-[3,5-bis(1,1-Dimethylethyl)-4-hydroxyphenyl]-1-oxopropoxy]methyl]- 1,3-propanediyl 3,5-bis(1,1-dimethyl-ethyl)-4-hydroxybenzenepropanoate as an antioxidant (commercially available as Irganox 1010 from Ciba-Geigy). The ingredients of the second component are melt blended in an extruder and pelletized at 193 to 249°C (380 to 480°F).

Parts A and B are tumbled in a tumbler at room temperature to form a homogeneous extrudable blend.

After mixing, the blend of Parts A and B is extruded through a 760 mm (30 inch) die at a thickness of about (16 mil) at a temperature not exceeding 232°C (450°F) and preferably in the range 193 to 216°C (380 to 420 °F).

The resulting sheets are scored with a razor blade to about 40 percent of their depth and permitted 10 foldings along the score line at a folding speed of at least 200 degrees/second and up to 2,000 degrees/second at room temperature (about 25°C). When subjected to flame retardancy Test UL-94, the resulting sheets exhibit a flame retardancy of about VTMO at a sheet thickness of 2.5 mm (0.10 inch) and above.

## Claims

1. An extrudable flame retardant composition comprising a blend consisting of
at least 33 % by weight of a propylene-ethylene copolymer having a tensile stress at yield of at least 13800 kPa, a density of 0.89 to 0.91 g/cc, and a drop weight impact, at -29°C, of at least 13.5 J;
25 to 45% by weight of a polypropylene having a tensile stress at yield of at least 20,700 kPa and a density of 0.89 to 0.91 g/cc, the ratio of polypropylene to copolymer being 0.5:1 to 0.8:1; and
14 to 23% by weight of a flame retardant.

2. A two-part extrudable flame-retardant composition comprising a first part of 28 to 35% by weight, based upon the weight of the composition, of polypropylene as defined in claim 1; and of 65 to 72% by weight, based upon the weight of the composition, of a second part comprising 65-75 % by weight, based upon the weight of the second part, of a copolymer as defined in claim 1 and 22 to 32% by weight, based on the weight of the second part, of a flame retardant, the ratio of polypropylene to copolymer being as defined in claim 1.

3. A composition as claimed in claim 1, wherein the amount of the copolymer in the blend is 35 to 55% by weight.

4. A composition as claimed in claim 1, wherein the blend consists of 29 to 34% by weight of the polypropylene, 45 to 52% by weight of the copolymer, and 18 to 19% by weight of the flame retardant, the ratio of polypropylene to copolymer being 0.6:1 to 0.7:1.

5. A composition as claimed in claim 2, wherein the second part further includes a halogen heat stabiliser and an antioxidant.

6. A composition as claimed in any preceding claim, wherein the polypropylene has a tensile stress at yield of 27600 to 34500 kPa, and the copolymer has a tensile stress at yield of at least 27600 kPa and a drop weight impact of 23 to 27 J.

7. A composition as claimed in any preceding claim, wherein the flame retardant comprises a halogenated organic flame retardant.

8. A composition as claimed in claim 7, wherein the flame retardant includes the bis(2,3-dibromopropyl ether) of tetrabromobisphenol A and antimony oxide, in a ratio of from 2:1 to 3:1 ether to antimony oxide.

9. A composition as claimed in any preceding claim, which further includes 0.5 to 1.2% by weight halogen heat stabiliser and 1 to 2% by weight antioxidant.

10. A flame-retardant sheet, 0.2 to 2.5 mm thick, extruded from a blend as defined in any preceding claim.

## Patentansprüche

1. Extrudierbare feuerhemmende Zusammensetzung mit einer Mischung bestehend aus:
wenigstens 33 Gew.-% eines Propylen-Ethylen-Copolymers mit einer Streckspannung von wenigstens 13800 kPa, einer Dichte von 0,89 bis 0,91 g/cm² und einer Fallgewichtschlagfestigkeit bei -29°C von wenigstens 13,5 J;
25 bis 45 Gew.-% eines Polypropylens mit einer Streckspannung von wenigstens 20700 kPa und einer Dichte von 0,89 bis 0,91 g/cm², wobei das Verhältnis von Polypropylen zu Copolymer 0,5:1 bis 0,8:1 ist; und
14 bis 23 Gew.-% eines feuerhemmenden Mittels.

2. Zweiteilige extrudierbare feuerhemmende Zusammensetzung mit einem ersten Teil aus bezogen auf das Gewicht der Zusammensetzung 28 bis 35 Gew.-% Polypropylen gemäß Anspruch 1; und aus bezogen auf das Gewicht der Zusammensetzung 65 bis 72 Gew.-% einer zweiten Komponente mit bezogen auf das Gewicht des zweiten Teils 65 bis 75 Gew.-% eines Copolymers gemäß Anspruch 1 und bezogen auf das Gewicht des zweiten Teils 22 bis 32 Gew.-% eines feuerhemmenden Mittels, wobei das Verhältnis von Polypropylen zu Copolymer so ist wie in Anspruch 1 festgelegt.

3. Zusammensetzung nach Anspruch 1, bei der der Copolymeranteil in der Mischung 35 bis 55 Gew.-% beträgt.

4. Zusammensetzung nach Anspruch 1, bei der die Mischung aus 29 bis 34 Gew.-% des Polypropylens, 45 bis 52 Gew.-% des Copolymers und 18 bis 19 Gew.-% des feuerhemmenden Mittels besteht und das Verhältnis von Polypropylen zu Copolymer 0,6:1 bis 0,7:1 ist.

5. Zusammensetzung nach Anspruch 2, bei der der zweite Teil ferner einen Halogenwärmestabilisator und ein Antioxidans einschließt.

6. Zusammensetzung nach einem der vorhergehenden Ansprüche, bei der das Polypropylen eine Streckspannung von 27600 bis 34500 kPa hat und das Copolymer eine Streckspannung von wenigstens 27600 kPa und eine Fallgewichtschlagfestigkeit von 23 bis 27 J hat.

7. Zusammensetzung nach einem der vorhergehenden Ansprüche, bei der das feuerhemmende Mittel ein halogeniertes organisches feuerhemmendes Mittel aufweist.

8. Zusammensetzung nach Anspruch 7, bei der das feuerhemmende Mittel den Bis(2,3-Dibromopropylether) von Tetrabromobisphenol A und Antimonoxid in einem Verhältnis von 2:1 bis 3:1 Ether zu Antimonoxid aufweist.

9. Zusammensetzung nach einem der vorhergehenden Ansprüche, die ferner 0,5 bis 1,2 Gew.-% Halogenwärmestabilisator und 1 bis 2 Gew.-% Antioxidans einschließt.

10. Feuerhemmendes Flachmaterial einer Dicke von 0,2 bis 2,5 mm, das aus einer Mischung gemäß einem der vorhergehenden Ansprüche extrudiert ist.

## Revendications

1. Composition extrudable contenant un retardateur de flamme, comprenant un mélange consistant en
au moins 33 % en poids d'un copolymère propylène-éthylène ayant une contrainte de traction à la limite d'au moins 13 800 kPa, une masse volumique de 0,89 à 0,91 g/cm³ et une résistance au choc à la masse tombante, à -29°C, d'au moins 13,5 J,
25 à 45 % en poids d'un polypropylène ayant une contrainte de traction à la limite d'au moins 20 700 kPa et une masse volumique de 0,89 à 0,91 g/cm³, le rapport du polypropylène au copolymère allant de 0,5:1 à 0,8:1 ; et
14 à 23 % en poids de retardateur de flamme.

2. Composition extrudable en deux parties contenant un retardateur de flamme, comprenant une première partie de 28 à 35 % en poids, sur la base du poids de la composition, d'un polypropylène tel que défini dans la revendication 1, et 65 à 72 % en poids, sur la base du poids de la composition, d'une seconde partie comprenant 65 à 75 % en poids, sur la base du poids de la seconde partie, d'un copolymère tel que défini dans la revendication 1 et 22 à 32 % en poids, sur la base du poids de la seconde partie, d'un retardateur de flamme, le rapport du polypropylène au copolymère étant tel que défini dans la revendication 1.

3. Composition suivant la revendication 1, dans lequel la quantité de copolymère présente dans le mélange va de 35 à 55 % en poids.

4. Composition suivant la revendication 1, dans laquelle le mélange consiste en 29 à 34 % en poids du polypropylène, 45 à 52 % en poids du copolymère et 18 à 19 % en poids du retardateur de flamme, le rapport du polypropylène au copolymère allant de 0,6:1 à 0,7:1.

5. Composition suivant la revendication 2, dans lequel la seconde partie contient en outre un agent thermostabilisant accepteur d'halogène et un anti-oxydant.

6. Composition suivant l'une quelconque des revendications précédentes, dans lequel le polypropylène a une contrainte de traction à la limite de 27 600 à 34 500 kPa et le copolymère a une contrainte de traction à la limite d'au moins 27 600 kPa et une résistance au choc à la masse tombante de 23 à 27 J.

7. Composition suivant l'une quelconque des revendications précédentes, dans lequel le retardateur de flamme comprend un retardateur de flamme organique halogéné.

8. Composition suivant la revendication 7, dans laquelle le retardateur de flamme contient le bis(éther de 2,3-dibromopropyle) du tétrabromobisphénol A et de l'oxyde d'antimoine dans un rapport de l'éther à l'oxyde d'antimoine de 2:1 à 3:1.

9. Composition suivant l'une quelconque des revendications précédentes, qui contient en outre 0,5 à 1,2 % en poids d'agent thermostabilisant accepteur d'halogène et 1 à 2 % en poids d'anti-oxydant.

10. Feuille retardatrice de flamme, ayant 0,2 à 2,5 mm d'épaisseur, extrudée à partir d'un mélange tel que défini dans l'une quelconque des revendications précédentes.
